# EUROPÄISCHE PATENTANMELDUNG

(11) **EP 4 230 898 A1**
(43) Veröffentlichungstag der Anmeldung: **23.08.2023**
(21) Anmeldenummer: 20957190.0
(22) Anmeldetag: 16.10.2020
(51) Int. Cl.: F16J 15/3212, F16C 33/78

(54) **DICHTUNGSVORRICHTUNG FÜR LAGER UND LAGER**

(71) Anmelder: Schaeffler Technologies AG & Co. KG, 91074 Herzogenaurach (DE)
(72) Erfinder: WU, Lijuan, SuZhou, Jiangsu 215021 (CN); TANG, Yu, Shanghai 201800 (CN); FAN, Jia, Suzhou, Jiangsu 215028 (CN); HUANG, Chunliang, Suzhou, Jiangsu 215000 (CN); WEI, Jianfei, Shanghai 201805 (CN); LIU, Xin, Shanghai 201805 (CN)
(86) Internationale Anmeldenummer: PCT/CN2020/121369
(87) Internationale Veröffentlichungsnummer: WO 2022/077412

(57) **Zusammenfassung**

Eine Dichtungsvorrichtung eines Lagers. Die Dichtungsvorrichtung umfasst einen Rahmen (10), eine Dichtungskomponente (20) und eine Vielzahl von elastischen Elementen (40), wobei der Rahmen (10) und die Dichtungskomponente (20) beide ringförmig und miteinander verbunden sind; der Rahmen (10) konfiguriert ist, um an einem ersten Ring eines Lagers befestigt zu sein; die Dichtungskomponente (20) konfiguriert ist, um an einem zweiten Ring des Lagers anzuliegen; die Vielzahl von elastischen Elementen (40) in Umfangsrichtung der Dichtungskomponente (20) in Abständen verteilt sind; und die elastischen Elemente (40) verwendet werden, um eine elastische Kraft auf die Dichtungskomponente (20) auszuüben, sodass die Dichtungskomponente (20) gegen den zweiten Ring gedrückt wird. Ein Lager, das die Dichtungsvorrichtung umfasst. Die Dichtungsvorrichtung ist auf Lager mit größeren Durchmessern anwendbar und weist eine gute Dichtungswirkung auf.

## Beschreibung

### Technisches Gebiet

Die vorliegende Erfindung betrifft das Gebiet von Lagern, insbesondere eine Dichtungsvorrichtung für ein Lager.

### Hintergrund

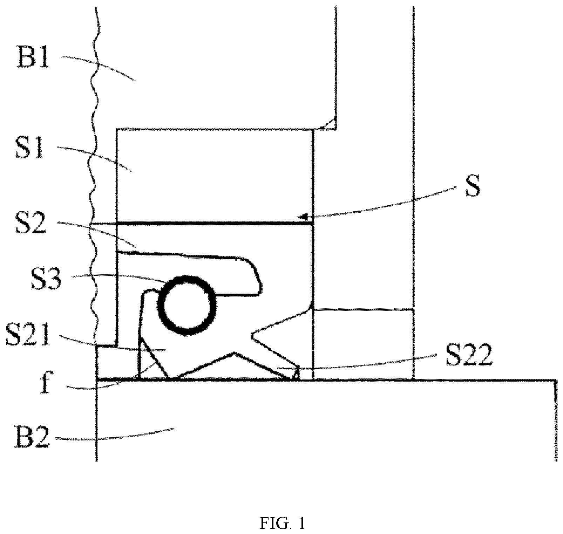

FIG. 1 zeigt eine mögliche Dichtungsvorrichtung S eines Lagers. Die Dichtungsvorrichtung S ist ringförmig und zwischen einem Außenring B1 und einem Innenring B2 des Lagers eingesetzt, um ein Austreten von beispielsweise einem Schmiermittel an einer Innenseite (einer linken Seite der Dichtungsvorrichtung S in der Figur) des Lagers zu vermeiden und währenddessen ein Eindringen von Fremdstoffen, wie beispielsweise Staub und Wasser, an einer Außenseite (einer rechten Seite der Dichtungsvorrichtung S in der Figur) des Lagers in das Lager zu verhindern.

Die Dichtungsvorrichtung S umfasst einen Rahmen S1, eine Dichtungskomponente S2 und eine Feder S3, die alle ringförmig sind. Der Rahmen S1 ist mit dem Außenring B1 durch Presspassung verbunden, die Dichtungskomponente S2 ist an dem Rahmen S1 angebracht und eine Hauptlippe S21 und eine Hilfslippe S22 der Dichtungskomponente S2 liegen beide am Innenring B2 an. Die Feder S3 ist eine Spiralfeder, und die Feder ist mit der Dichtungskomponente S2 verbunden und übt eine Kraft in Richtung einer radialen Innenseite auf die Dichtungskomponente S2 aus, sodass die Dichtungskomponente S2 (insbesondere die Hauptlippe S21) gegen den Innenring B2 gedrückt wird.

Eine dem Innenring B2 und der Innenseite des Lagers zugewandte Fläche der Hauptlippe S21 ist eine geneigte Fläche f. Wenn das Schmiermittel (insbesondere das an einer Umfangswand des Innenrings B2 haftende Schmiermittel) auf der Innenseite des Lagers während der Drehung des Lagers spritzt, wird das zu der geneigten Fläche f geschleuderte Schmiermittel durch die geneigte Fläche f blockiert und in Richtung der Innenseite des Lagers gepumpt. Insbesondere beim Laufvorgang des Lagers mit hoher Drehzahl spielt die geneigte Fläche f eine Rolle beim Pumpen des Schmiermittels, das zur Innenseite des Lagers austreten kann.

Die Dichtungsfunktion der vorstehend genannten Dichtungsvorrichtung S zeigt jedoch keine ideale Leistung bei beispielsweise einem Lager mit einer relativ niedrigen Drehzahl oder einem Lager mit einem großen Durchmesser (wie einem Lager eines Windkraftgenerators).

Beispielsweise sammelt sich das Schmiermittel bei dem Lager mit der relativ niedrigen Drehzahl leicht an einem Außenumfang des Innenrings B2, anstatt zu spritzen; und von einem Teil des verspritzten Schmiermittels wird nur ein kleiner Teil direkt zu der geneigten Fläche f geschleudert und weiter durch die geneigte Fläche f zur Innenseite des Lagers gepumpt. In diesem Fall neigt das Schmiermittel dazu, sich an der Position der Hauptlippe S21 anzusammeln, um einen Austritt zu verursachen.

Als weiteres Beispiel ist die Dichtungsvorrichtung S bei einem Lager mit großem Durchmesser (beispielsweise ist der Durchmesser eines Hauptwellenlagers eines Windkraftgenerators größer als 1 Meter und kann mehrere Meter erreichen) während der Drehung aufgrund des übermäßig großen Durchmessers einer hohen Fliehkraft ausgesetzt, was für das dichte Anliegen der Hauptlippe S21 am Innenring B2 ungünstig ist. Wenn andererseits der Durchmesser der Dichtungsvorrichtung S größer wird und das Eigengewicht zunimmt, wird eine radiale Kraft der Feder S3 ungleichmäßig in der Umfangsrichtung verteilt, was dazu führt, dass eine geeignete Baugröße schwierig zu berechnen ist und die Feder S3 schwierig mit einer geeigneten Baugröße zu konstruieren ist.

### Kurzdarstellung

Eine Aufgabe der vorliegenden Erfindung besteht darin, eine Dichtungsvorrichtung mit einer guten Dichtungswirkung bereitzustellen, um die Mängel des Standes der Technik zu beheben oder mindestens zu verringern.

Gemäß einem ersten Aspekt der vorliegenden Erfindung wird eine Dichtungsvorrichtung eines Lagers bereitgestellt, die einen Rahmen, eine Dichtungskomponente und eine Vielzahl von elastischen Elementen umfasst, wobei der Rahmen und die Dichtungskomponente beide ringförmig und miteinander verbunden sind. Der Rahmen ist konfiguriert, um an einem ersten Ring des Lagers befestigt zu sein. Die Dichtungskomponente ist konfiguriert, um an einem zweiten Ring des Lagers anzuliegen, wobei

die Vielzahl von elastischen Elementen in Umfangsrichtung der Dichtungskomponente in Abständen verteilt sind
und die elastischen Elemente verwendet werden, um eine elastische Kraft auf die Dichtungskomponente auszuüben, sodass die Dichtungskomponente gegen den zweiten Ring gedrückt wird.

In mindestens einer Ausführungsform sind die elastischen Elemente C-förmig.

In mindestens einer Ausführungsform umfasst ein Herstellungsmaterial des Rahmens Gewebe.

In mindestens einer Ausführungsform umfasst ein Herstellungsmaterial der Dichtungskomponente Gummi.

In mindestens einer Ausführungsform sind die Dichtungskomponente und die elastischen Elemente durch einen Vulkanisierungsvorgang miteinander verbunden.

In mindestens einer Ausführungsform sind mehrere Durchgangslöcher an den elastischen Elementen ausgebildet und die Dichtungskomponente verläuft teilweise durch die Durchgangslöcher.

In mindestens einer Ausführungsform sind mehrere Positionierungslöcher an den elastischen Elementen ausgebildet und die Positionierungslöcher werden verwendet, um beim Unterstützen des Bestimmens der Umfangspositionen der elastischen Elemente an der Dichtungskomponente mit Positionierungsvorrichtungen an einer Form zusammenzuwirken.

In mindestens einer Ausführungsform ist eine dem zweiten Ring und einem inneren Seitenbereich des Lagers zugewandte Fläche der Dichtungskomponente teilweise in Richtung einer Außenseite der Dichtungsvorrichtung vertieft, um eine Vielzahl von Ölpumpnuten zu bilden, und die Vielzahl von Ölpumpnuten sind in Umfangsrichtung der Dichtungskomponente verteilt.

In mindestens einer Ausführungsform sind die Öffnungen der Ölpumpnuten umso größer, je näher sie in Richtung einer Innenseite des Lagers sind.

In mindestens einer Ausführungsform umfasst die Dichtungskomponente eine Hauptlippe und eine Hilfslippe; die Hauptlippe neigt sich in einer axialen Richtung der Dichtungskomponente zu einer Seite; die Hilfslippe neigt sich in der axialen Richtung zu der anderen Seite; die Hauptlippe wird verwendet, um der Innenseite des Lagers zugewandt zu sein; und die Hilfslippe wird verwendet, um einer Außenseite des Lagers zugewandt zu sein.

In mindestens einer Ausführungsform wird die Hauptlippe verwendet, um mit dem zweiten Ring in Kontakt zu stehen.

In mindestens einer Ausführungsform umfasst die Dichtungsvorrichtung ferner eine Zusatzlippe; die Zusatzlippe wird verwendet, um der Außenseite des Lagers zugewandt zu sein und steht in Kontakt mit dem zweiten Ring; und ein Herstellungsmaterial der Zusatzlippe weist Luftdurchlässigkeit auf.

In mindestens einer Ausführungsform ist die Hilfslippe ferner mit einer Zusatzlippe versehen, die Zusatzlippe wird verwendet, um mit dem zweiten Ring in Kontakt zu stehen, und ein Herstellungsmaterial der Zusatzlippe umfasst Filz.

In mindestens einer Ausführungsform beträgt ein Innendurchmesser des Rahmens nicht weniger als 1 m.

Gemäß einem zweiten Aspekt der vorliegenden Erfindung wird ein Lager bereitgestellt, das einen ersten Ring und einen zweiten Ring umfasst, die ineinander passen und relativ zueinander drehbar sind, und dadurch gekennzeichnet ist, dass das Lager ferner die Dichtungsvorrichtung gemäß der vorliegenden Erfindung umfasst.

In mindestens einer Ausführungsform ist das Lager ein Hauptwellenlager eines Windkraftgenerators.

Die Dichtungsvorrichtung gemäß der vorliegenden Erfindung kann für Lager mit größeren Durchmessern geeignet sein, und die Dichtungsvorrichtung weist eine hohe Zuverlässigkeit und eine gute Dichtungswirkung auf.

### Kurzbeschreibung der Zeichnungen

FIG. 1 zeigt eine Schnittansicht einer möglichen Dichtungsvorrichtung, die an einem Lager montiert ist.
FIG. 2 ist eine axiale schematische Darstellung einer Dichtungsvorrichtung S gemäß einer ersten Ausführungsform der vorliegenden Erfindung.
FIG. 3 ist eine vergrößerte dreidimensionale schematische Darstellung eines eingekreisten Teils in FIG. 2.
FIG. 4 ist eine Hälfte einer Schnittansicht der Dichtungsvorrichtung S gemäß der ersten Ausführungsform der vorliegenden Erfindung senkrecht zu einer axialen Richtung.
FIG. 5 ist eine schematische Darstellung eines elastischen Elements 40 gemäß der ersten Ausführungsform der vorliegenden Erfindung.
FIG. 6 ist eine vergrößerte schematische Darstellung des eingekreisten Teils in FIG. 2.
FIG. 7 ist eine schematische, teilweise angeschnittene Darstellung einer Dichtungsvorrichtung S gemäß einer zweiten Ausführungsform der vorliegenden Erfindung.
FIG. 8 ist eine schematische Darstellung eines elastischen Elements 40 gemäß der zweiten Ausführungsform der vorliegenden Erfindung.
FIG. 9 ist eine Hälfte einer Schnittansicht der Dichtungsvorrichtung S gemäß der zweiten Ausführungsform der vorliegenden Erfindung senkrecht zu einer axialen Richtung.

### Ausführliche Beschreibung

Beispielhafte Ausführungsformen der vorliegenden Erfindung werden nachstehend unter Bezugnahme auf die beiliegenden Zeichnungen beschrieben. Es versteht sich, dass diese konkreten Beschreibungen Fachleute nur lehren sollen, wie die vorliegende Erfindung zu realisieren ist, und weder alle möglichen Variationen der vorliegenden Erfindung erschöpfend darlegen noch den Schutzumfang der vorliegenden Erfindung einschränken sollen.

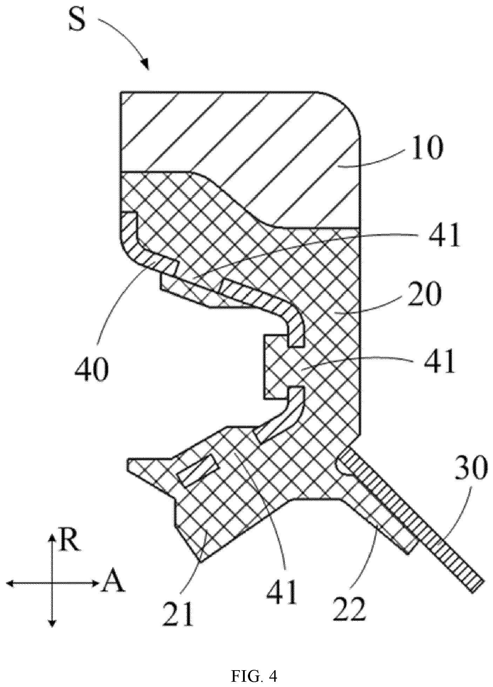

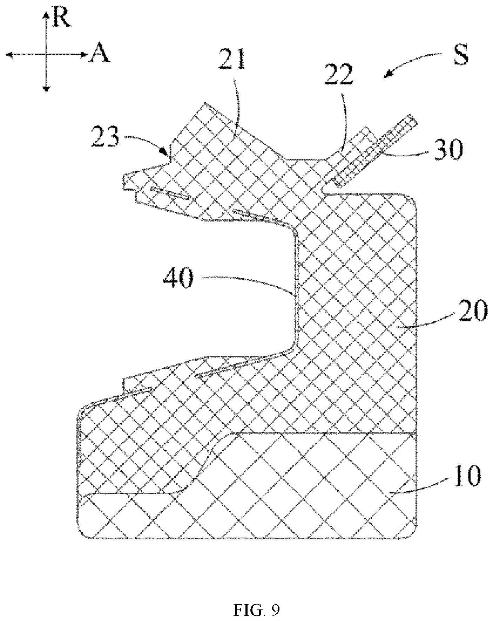

Sofern nicht anders angegeben, bezeichnet A unter Bezugnahme auf FIG. 4 und FIG. 9 eine axiale Richtung der Dichtungsvorrichtung S und die axiale Richtung A stimmt mit einer axialen Richtung eines Lagers überein; und R bezeichnet eine radiale Richtung der Dichtungsvorrichtung S und die radiale Richtung R stimmt mit einer radialen Richtung des Lagers überein.

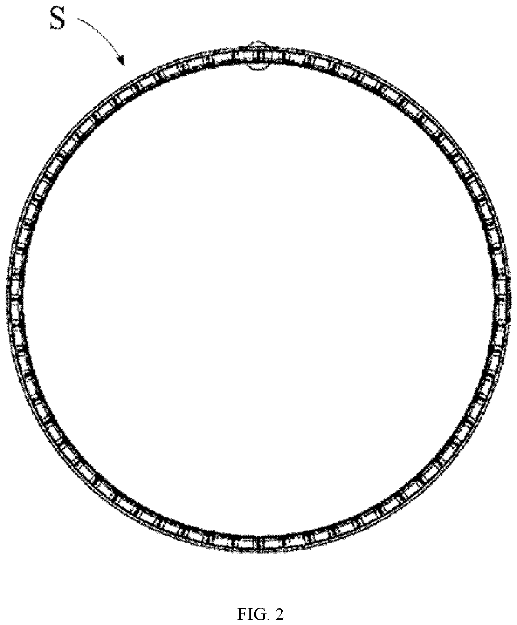

Unter Bezugnahme auf FIG. 2 bis FIG. 9 wird die Dichtungsvorrichtung S des Lagers gemäß der vorliegenden Erfindung beschrieben.

### (Erste Ausführungsform)

Zunächst wird unter Bezugnahme auf FIG. 2 bis FIG. 6 eine Dichtungsvorrichtung S gemäß der ersten Ausführungsform der vorliegenden Erfindung beschrieben.

Wie in FIG. 2 gezeigt, ist die Dichtungsvorrichtung S ringförmig.

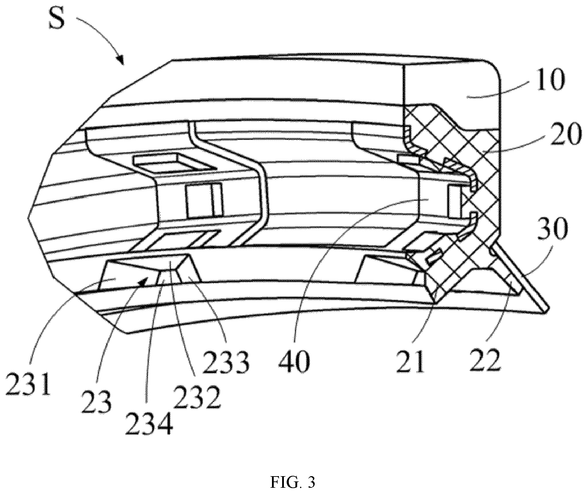

Weiter unter Bezugnahme auf FIG. 3 und FIG. 4 umfasst die Dichtungsvorrichtung S einen Rahmen 10, eine Dichtungskomponente 20, eine Zusatzlippe 30 und elastische Elemente 40, die alle ringförmig sind.

In der vorliegenden Ausführungsform ist die Dichtungskomponente 20 an einer inneren Umfangsseite des Rahmens 10 angeordnet. Der Rahmen 10 ist konfiguriert, um mit einem Außenring (in der vorliegenden Ausführungsform auch als erster Ring bezeichnet) eines Lagers in Presspassung verbunden zu sein, und die Dichtungskomponente 20 ist konfiguriert, um an einem Innenring (in der vorliegenden Ausführungsform auch als zweiter Ring bezeichnet) des Lagers anzuliegen, und ist relativ zu dem Innenring drehbar.

Ein Herstellungsmaterial des Rahmens 10 umfasst Gewebe, beispielsweise Baumwolle oder Nylon. Daher weist der Rahmen 10 eine hohe Flexibilität auf, ist einfach herzustellen und kostengünstig und lässt sich leicht an dem Außenring des Lagers zusammenbauen. Solche Vorteile sind besonders offensichtlich für den Rahmen 10 mit einem großen Durchmesser (beispielsweise etwa 1 m oder mehr als 1 m).

Ein Herstellungsmaterial der Dichtungskomponente 20 ist beispielsweise Gummi. Die Dichtungskomponente 20 ist beispielsweise durch einen Vulkanisierungsvorgang mit dem Rahmen 10 verbunden.

Unter Berücksichtigung der beispielhaft in FIG. 4 gezeigten Ausrichtung als Beispiel ist eine linke Seite der Dichtungsvorrichtung S in der Figur die Innenseite (d. h. eine Schmiermittelseite) des Lagers und eine rechte Seite der Dichtungsvorrichtung S ist die Außenseite (d. h. eine Luftseite) des Lagers.

Die Dichtungskomponente 20 umfasst eine Hauptlippe 21 und eine Hilfslippe 22. Relativ zu einer Ebene senkrecht zu einer axialen Richtung A neigt sich die Hauptlippe 21 zur Innenseite und die Hilfslippe 22 neigt sich zur Außenseite.

Eine Vielzahl von elastischen Elementen 40 ist bereitgestellt, und die Vielzahl von elastischen Elementen 40 ist gleichmäßig in einer Umfangsrichtung der Dichtungskomponente 20 verteilt.

Die elastischen Elemente 40 sind ungefähr C-förmig, und Öffnungen mit C-Form sind ungefähr der Innenseite des Lagers zugewandt.

Die elastischen Elemente 40 sind teilweise mit der Hauptlippe 21 verbunden, um sicherzustellen, dass die elastischen Elemente 40 eine Komponentenkraft mindestens in einer radialen Richtung R auf die Hauptlippe 21 ausüben können, wenn die Dichtungsvorrichtung S an dem Lager montiert ist, sodass die Hauptlippe 21 in engem Kontakt mit dem Innenring steht.

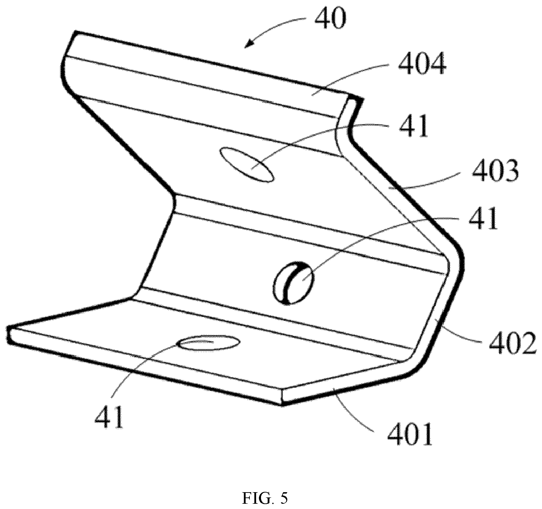

Unter Bezugnahme auf FIG. 5 umfasst das elastische Element 40 währenddessen drei blechartige Teile (ein erstes Biegeblech 401, ein zweites Biegeblech 402 und ein drittes Biegeblech 403), die miteinander verbunden und schräg zueinander angeordnet sind. Vorzugsweise ist ein von dem zweiten Biegeblech 402 entferntes Endteil des dritten Biegeblechs 403 ferner mit einem vierten Biegeblech 404 verbunden; eine Biegerichtung des vierten Biegeblechs 404 ist entgegengesetzt zu einer Öffnungsrichtung des C-förmigen elastischen Elements 40; und das vierte Biegeblech 404 erstreckt sich in Richtung des Rahmens 10. Eine der Öffnung der C-Form zugewandte Oberfläche des elastischen Elements 40 fällt im Wesentlichen mit einer der Innenseite zugewandten Oberfläche der Dichtungskomponente 20 zusammen.

Unter Bezugnahme auf FIG. 4 und FIG. 5 ist das erste Biegeblech 401 an die (axiale) Innenseite der Hauptlippe 21 gebunden und erstreckt sich in Richtung einer radialen Außenseite, während es sich zu einer axialen Außenseite erstreckt. Das zweite Biegeblech 402 ist an ein schmales Teil eines radialen mittleren Teils der Dichtungskomponente 20 gebunden, befindet sich an einer (axialen) Innenseite des schmalen Teils und erstreckt sich im Wesentlichen entlang einer radialen Richtung R. Das dritte Biegeblech 403 ist an ein mit dem Rahmen 10 verbundenes Basisteil der Dichtungskomponente 20 gebunden; und das dritte Biegeblech 403 erstreckt sich in Richtung der radialen Außenseite, während es sich in Richtung der axialen Innenseite erstreckt. Das erste Biegeblech 401 und das dritte Biegeblech 403 sind einander in der radialen Richtung R zugewandt, sodass eine elastische dem Innenring des Lagers zugewandte Kraft auf die Hauptlippe 21 ausgeübt werden kann.

Das elastische Element 40 ist mit mehreren (in der vorliegenden Ausführungsform drei) Durchgangslöchern 41 (auch als Gummiüberlauflöcher bezeichnet) versehen. Das elastische Element 40 und die Dichtungskomponente 20 sind beispielsweise durch einen Vulkanisierungsvorgang miteinander verbunden. Bei dem Vulkanisierungsvorgang kann halbfester Gummi durch die Durchgangslöcher 41 gelangen und die elastischen Elemente 40 teilweise umhüllen, d. h., es ist gezeigt, dass die Dichtungskomponente 20 teilweise durch die Durchgangslöcher 41 verläuft, sodass das elastische Element 40 fest mit der Dichtungskomponente 20 verbunden ist.

Vorzugsweise ist jedes des ersten Biegeblechs 401, des zweiten Biegeblechs 402 und des dritten Biegeblechs 403 mit mindestens einem Durchgangsloch 41 versehen.

Die dem Innenring und der Innenseite des Lagers zugewandte Oberfläche der Hauptlippe 21 ist in Richtung der Außenseite teilweise vertieft, um eine Vielzahl von Ölpumpnuten 23 zu bilden. Vorzugsweise ist die Vielzahl von Ölpumpnuten 23 gleichmäßig in der Umfangsrichtung der Dichtungskomponente 20 verteilt.

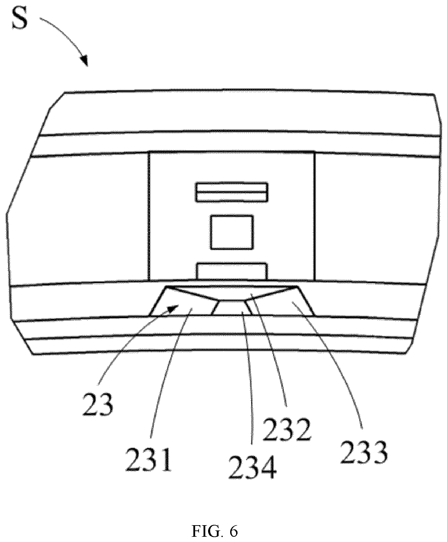

In der vorliegenden Ausführungsform umfasst die Ölpumpnut 23 unter Bezugnahme auf FIG. 3 und FIG. 6 vier Innenoberflächen, um eine Trompetenform zu bilden (je näher die Öffnung der Ölpumpnut 23 an Innenseite des Lagers ist, umso größer ist deren Öffnung). Die vier Innenoberflächen sind eine erste Fläche 231, eine zweite Fläche 232, eine dritte Fläche 233 bzw. eine vierte Fläche 234. Die vierte Fläche 234 befindet sich am tiefsten Teil der Ölpumpnut 23 und die vierte Fläche 234 ist im Wesentlichen parallel zu der Oberfläche senkrecht zu der axialen Richtung A. Die erste Fläche 231 und die dritte Fläche 233 befinden sich an zwei Seiten der vierten Fläche 234 in einer Umfangsrichtung, und die zweite Fläche 232 befindet sich auf einer radialen Außenseite der vierten Fläche 234 und ist sowohl mit der ersten Fläche 231 als auch der dritten Fläche 233 verbunden.

Durch die obige Anordnung der Ölpumpnut 23 kann an der Innenseite verspritztes Öl mit hoher Wahrscheinlichkeit auf die geneigten Innenoberflächen (hauptsächlich die erste Fläche 231, die zweite Fläche 232 und die dritte Fläche 233) der Ölpumpnut 23 auftreffen, wodurch es durch diese geneigten Innenoberflächen zurückgepumpt wird und sich nicht leicht in der Nähe der Hauptlippe 21 ansammelt oder sogar an der Außenseite des Lagers austritt.

Es versteht sich, dass die Ölpumpnut 23 nicht darauf beschränkt ist, aus vier Innenoberflächen zusammengesetzt zu sein, sie kann beispielsweise mehr geneigte Innenoberflächen umfassen, oder die Innenoberflächen der Ölpumpnut 23 können auch gekrümmte Oberflächen umfassen.

Unter weiterer Bezugnahme auf FIG. 3 und FIG. 4 kann die Hilfslippe 22 in Kontakt mit dem Innenring stehen oder nicht, wenn die Hauptlippe 21 in Kontakt mit dem Innenring steht. Wenn außerdem die Hilfslippe 22 ebenfalls mit dem Innenring in Kontakt steht, steht die Hilfslippe 22 mit einer ziemlich geringen radialen Kraft in Kontakt mit dem Innenring, und die radiale Kraft, mit der die Hilfslippe 22 an dem Innenring anliegt, ist kleiner als eine radiale Kraft, mit der die Hauptlippe 21 an dem Innenring anliegt.

Eine Zusatzlippe 30 ist mit der Hilfslippe 22 verbunden. Vorzugsweise ist die Zusatzlippe 30 an einer der Außenseite zugewandten Oberfläche der Hilfslippe 22 angeordnet. Vorzugsweise ist die Zusatzlippe 30 klebend mit der Hilfslippe 22 verbunden.

Die Zusatzlippe 30 ist aus einem Material mit guter Luftdurchlässigkeit hergestellt. Vorzugsweise umfasst ein Herstellungsmaterial der Zusatzlippe 30 Filz. Vorzugsweise steht die Zusatzlippe 30 in Kontakt mit dem Innenring, wenn die Dichtungsvorrichtung S an dem Lager montiert ist.

In einem ersten Aspekt spielt die Zusatzlippe 30 eine Rolle beim Verhindern, dass Fremdstoffe an der Außenseite in die Innenseite des Lagers eindringen; in einem zweiten Aspekt spielt die Zusatzlippe 30 eine Rolle beim Schützen der Hilfslippe 22, sodass die Hilfslippe 22 nicht in direktem Kontakt mit den äußeren Fremdstoffen und nicht in Kontakt mit dem Innenring stehen muss, um nicht leicht zu verschleißen, und die aus Filz hergestellte Zusatzlippe 30 weist eine gute Festigkeit auf und reißt nicht einfach; und in einem dritten Aspekt kann die Zusatzlippe 30 beispielsweise verhindern, dass Wasser an der Außenseite in die Innenseite des Lagers eindringt, und währenddessen schränkt die Zusatzlippe 30 die Zirkulation von Luft nicht ein, sodass Luftdrücke an zwei axialen Seiten der Hilfslippe 22 ausgeglichen oder nahezu ausgeglichen gehalten werden können.

### (Zweite Ausführungsform)

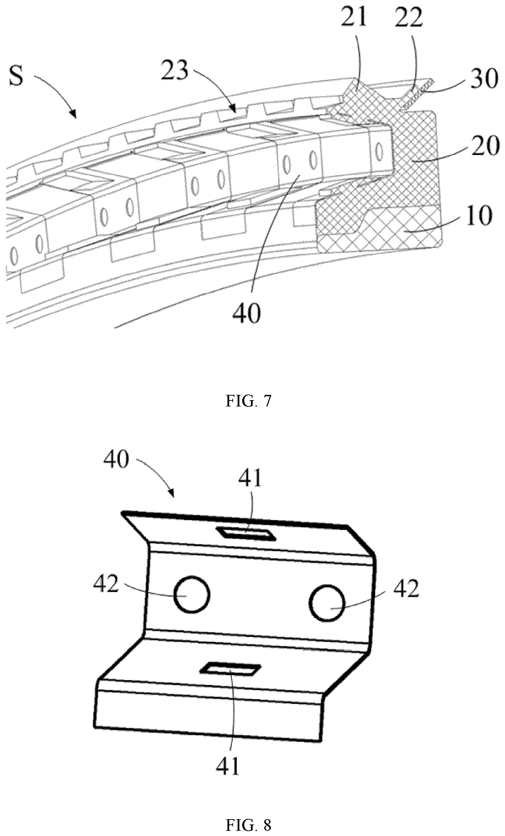

Die zweite Ausführungsform gemäß der vorliegenden Erfindung wird nachstehend unter Bezugnahme auf FIG. 7 bis FIG. 9 beschrieben. Komponenten, die dieselbe oder eine ähnliche Konstruktion oder Funktion wie diejenigen in der ersten Ausführungsform aufweisen, sind mit denselben Bezugszeichen bezeichnet, und auf eine detaillierte Beschreibung dieser Komponenten wird verzichtet.

In der vorliegenden Ausführungsform ist die Dichtungskomponente 20 an einer Außenumfangsseite des Rahmens 10 angeordnet. Der Rahmen 10 ist konfiguriert, um mit einem Innenring (in der vorliegenden Ausführungsform auch als erster Ring bezeichnet) eines Lagers in Presspassung verbunden zu sein, wobei sich der Rahmen 10 und der Innenring nicht relativ zueinander drehen, die Dichtungskomponente 20 ist konfiguriert, um an einem Außenring (in der vorliegenden Ausführungsform auch als zweiter Ring bezeichnet) des Lagers anzuliegen, und die Dichtungskomponente 20 ist relativ zu dem Außenring drehbar.

In der vorliegenden Ausführungsform sind die elastischen Elemente 40 ferner mit mehreren (zwei in der vorliegenden Ausführungsform) Positionierungslöchern 42 versehen, mit Ausnahme von Durchgangslöchern 41, durch die Gummi verläuft. Die Positionierungslöcher 42 werden verwendet, um Positionierungsstifte an einer Vulkanisierungsform während des Vulkanisierungsvorgangs zum Verbinden der elastischen Elemente 40 mit der Dichtungskomponente 20 auszurichten, um die Positionierungsgenauigkeit der elastischen Elemente 40 an der Dichtungskomponente 20 sicherzustellen.

Es versteht sich, dass einige Aspekte oder Merkmale der vorstehend genannten Ausführungsformen geeignet kombiniert werden können.

Es versteht sich, dass die vorliegende Erfindung ferner ein Lager bereitstellt, das die vorstehend genannte Dichtungsvorrichtung S umfasst. Vorzugsweise weist das Lager einen Durchmesser von 1 Meter bis zu mehreren Metern auf. Vorzugsweise ist das Lager ein Lager, das für eine Hauptwelle eines Windkraftgenerators verwendet wird.

Einige der vorteilhaften Wirkungen der vorstehend genannten Ausführungsformen der vorliegenden Erfindung werden nachstehend kurz beschrieben.
(i) Eine Vielzahl von C-förmigen elastischen Elementen 40 stellt an unterschiedlichen Positionen in der Umfangsrichtung gleichmäßig radiale Kräfte für die Dichtungskomponente 20 bereit, um an dem zweiten Ring des Lagers anzuliegen, sodass die Dichtungskomponente 20 in engem Kontakt mit dem zweiten Ring stehen kann, und die Dichtungsvorrichtung S weist eine gute Dichtungswirkung auf.
(ii) Die Gummiüberlauflöcher (Durchgangslöcher 41) an den elastischen Elementen 40 ermöglichen, dass die beispielsweise aus Gummi hergestellte Dichtungskomponente 20 durch diese verläuft, und die elastischen Elemente 40 und die Dichtungskomponente 20 sind fest verbunden.
(iii) Die trompetenförmigen Ölpumpnuten 23 können Schmiermittel nahe der Hauptlippe 21 wirksam zur Innenseite des Lagers pumpen, und das Schmiermittel kann nicht leicht austreten.
(iv) Die Zusatzlippe 30 kann verhindern, dass externe Verunreinigungen in die Innenseite des Lagers eindringen, und währenddessen die Hilfslippe 22 davor schützen, dass sie leicht reißt oder abgenutzt wird, und die gute Luftdurchlässigkeit und Wasserbeständigkeit der Zusatzlippe 30 ermöglichen ausgeglichene Drücke an zwei axialen Seiten der Hilfslippe 22.

Es versteht sich, dass die vorstehend genannten Ausführungsformen nur beispielhaft sind und die vorliegende Erfindung nicht einschränken sollen. Fachleute können verschiedene Modifikationen und Änderungen an den vorstehend genannten Ausführungsformen gemäß der Lehre der vorliegenden Erfindung vornehmen, ohne vom Schutzumfang der vorliegenden Erfindung abzuweichen. Zum Beispiel:
(i) Obwohl ein Innenring eines Hauptwellenlagers eines Windkraftgenerators üblicherweise ein rotierender Ring ist und ein Außenring ein unbeweglicher Ring ist, beschränkt die vorliegende Erfindung nicht den Betriebszustand des Innenrings und des Außenrings des Lagers. Beispielsweise kann in den zwei vorstehend genannten Ausführungsformen ein beliebiger des Innenrings und des Außenrings ein rotierender Ring sein, und der andere kann ein unbeweglicher Ring sein.
(ii) Die vorliegende Erfindung schränkt Formen und Mengen der Durchgangslöcher 41 und der Positionierungslöcher 42 der elastischen Elemente 40 nicht ein. Beispielsweise können die Durchgangslöcher 41 kreisförmig, quadratisch oder von anderen Formen sein.
(iii) Die elastischen Elemente 40 der vorliegenden Erfindung können auch nicht C-förmig, sondern beispielsweise L-förmig oder Z-förmig sein, oder das elastische Element 40 umfasst mindestens zwei Bereiche, die zueinander gebogen sind. Wenn die Dichtungsvorrichtung an dem Lager montiert ist, befinden sich die elastischen Elemente 40 in einem komprimierten Zustand, sodass die elastischen Elemente 40 eine elastische Kraft auf die Dichtungskomponente 20 ausüben können, sodass die Dichtungskomponente 20 gegen den zweiten Ring gedrückt wird.

Unter Bezugnahme auf FIG. 5 kann das elastische Element beispielsweise, wenn das elastische Element im Wesentlichen L-förmig ist, ein erstes Biegeblech 401 und ein zweites Biegeblech 402 umfassen, wie in FIG. 5 gezeigt.

### Liste der Bezugszeichen

- B1: Außenring;
- B2: Innenring;
- S1: Rahmen;
- S2: Dichtungskomponente;
- S3: Feder;
- S21: Hauptlippe;
- S22: Hilfslippe;
- f: geneigte Oberfläche;
- S: Dichtungsvorrichtung;
- 10: Rahmen;
- 20: Dichtungskomponente;
- 21: Hauptlippe;
- 22: Hilfslippe;
- 23: Ölpumpnut;
- 231: erste Fläche;
- 232: zweite Fläche;
- 233: dritte Fläche;
- 234: vierte Fläche;
- 30: Zusatzlippe;
- 40: elastisches Element;
- 41: Durchgangsloch;
- 42: Positionierungsloch;
- A: axiale Richtung;
- R: radiale Richtung.

## Patentansprüche

1. Dichtungsvorrichtung eines Lagers, umfassend einen Rahmen (10), eine Dichtungskomponente (20) und eine Vielzahl von elastischen Elementen (40), wobei der Rahmen (10) und die Dichtungskomponente (20) beide ringförmig und miteinander verbunden sind; der Rahmen (10) konfiguriert ist, um an einem ersten Ring des Lagers befestigt zu sein; die Dichtungskomponente (20) konfiguriert ist, um an einem zweiten Ring des Lagers anzuliegen, wobei
die Vielzahl von elastischen Elementen (40) in Umfangsrichtung der Dichtungskomponente (20) in Abständen verteilt sind und
die elastischen Elemente (40) verwendet werden, um eine elastische Kraft auf die Dichtungskomponente (20) auszuüben, sodass die Dichtungskomponente (20) gegen den zweiten Ring gedrückt wird.

2. Dichtungsvorrichtung nach Anspruch 1, **dadurch gekennzeichnet, dass** die elastischen Elemente (40) C-förmig sind.

3. Dichtungsvorrichtung nach Anspruch 1, **dadurch gekennzeichnet, dass** ein Herstellungsmaterial des Rahmens (10) Gewebe umfasst.

4. Dichtungsvorrichtung nach Anspruch 1, **dadurch gekennzeichnet, dass** ein Herstellungsmaterial der Dichtungskomponente (20) Gummi umfasst.

5. Dichtungsvorrichtung nach Anspruch 4, **dadurch gekennzeichnet, dass** die Dichtungskomponente (20) und die elastischen Elemente (40) durch einen Vulkanisierungsvorgang miteinander verbunden sind.

6. Dichtungsvorrichtung nach Anspruch 1, **dadurch gekennzeichnet, dass** mehrere Durchgangslöcher (41) an den elastischen Elementen (40) ausgebildet sind und die Dichtungskomponente (20) teilweise durch die Durchgangslöcher (41) verläuft.

7. Dichtungsvorrichtung nach Anspruch 1, **dadurch gekennzeichnet, dass** mehrere Positionierungslöcher (42) an den elastischen Elementen (40) ausgebildet sind und die Positionierungslöcher (42) verwendet werden, um beim Unterstützen des Bestimmens der Umfangspositionen der elastischen Elemente (40) an der Dichtungskomponente (20) mit Positionierungsvorrichtungen an einer Form zusammenzuwirken.

8. Dichtungsvorrichtung nach Anspruch 1, **dadurch gekennzeichnet, dass** eine dem zweiten Ring und einem inneren Seitenbereich des Lagers zugewandte Fläche der Dichtungskomponente (20) teilweise in Richtung einer Außenseite der Dichtungsvorrichtung vertieft ist, um eine Vielzahl von Ölpumpnuten (23) zu bilden, und die Vielzahl von Ölpumpnuten (23) in Umfangsrichtung der Dichtungskomponente (20) verteilt sind.

9. Dichtungsvorrichtung nach Anspruch 8, **dadurch gekennzeichnet, dass** die Öffnungen der Ölpumpnuten (23) umso größer sind, je näher sie in Richtung einer Innenseite des Lagers sind.

10. Dichtungsvorrichtung nach Anspruch 1, **dadurch gekennzeichnet, dass** die Dichtungskomponente (20) eine Hauptlippe (21) und eine Hilfslippe (22) umfasst, wobei sich die Hauptlippe (21) in einer axialen Richtung der Dichtungskomponente (20) zu einer Seite neigt, die Hilfslippe (22) sich in axialer Richtung zu der anderen Seite neigt, die Hauptlippe (21) verwendet wird, um der Innenseite des Lagers zugewandt zu sein, und die Hilfslippe (22) verwendet wird, um einer Außenseite des Lagers zugewandt zu sein.

11. Dichtungsvorrichtung nach Anspruch 10, **dadurch gekennzeichnet, dass** die Hauptlippe (21) verwendet wird, um mit dem zweiten Ring in Kontakt zu stehen.

12. Dichtungsvorrichtung nach Anspruch 1, **dadurch gekennzeichnet, dass** die Dichtungsvorrichtung ferner eine Zusatzlippe (30) umfasst, wobei die Zusatzlippe (30) konfiguriert ist, um der Außenseite des Lagers zugewandt zu sein und in Kontakt mit dem zweiten Ring zu stehen; und ein Herstellungsmaterial der Zusatzlippe (30) Luftdurchlässigkeit aufweist.

13. Dichtungsvorrichtung nach Anspruch 10, **dadurch gekennzeichnet, dass** die Hilfslippe (22) ferner mit einer Zusatzlippe (30) versehen ist, wobei die Zusatzlippe (30) verwendet wird, um mit dem zweiten Ring in Kontakt zu stehen, und ein Herstellungsmaterial der Zusatzlippe (30) Filz umfasst.

14. Dichtungsvorrichtung nach einem der Ansprüche 1 bis 13, **dadurch gekennzeichnet, dass** ein Innendurchmesser des Rahmens (10) nicht weniger als 1 m beträgt.

15. Lager, umfassend einen ersten Ring und einen zweiten Ring, die ineinander passen und relativ zueinander drehbar sind, **dadurch gekennzeichnet, dass** das Lager ferner die Dichtungsvorrichtung nach einem der Ansprüche 1 bis 14 umfasst.

16. Lager nach Anspruch 15, **dadurch gekennzeichnet, dass** das Lager ein Hauptwellenlager eines Windkraftgenerators ist.
